# EUROPÄISCHE PATENTSCHRIFT

(11) **EP 2 972 099 B1**
(45) Veröffentlichungstag und Bekanntmachung des Hinweises auf die Patenterteilung: **08.05.2019**
(21) Anmeldenummer: 14708486.7
(22) Anmeldetag: 06.03.2014
(51) Int. Cl.: G01C 21/36, G06F 3/023

(54) **EINEM FAHRZEUG ZUGEORDNETE VORRICHTUNG MIT BUCHSTABIER -VERVOLLSTÄNDIGUNGS-KENNZEICHNUNG**
VEHICULAR DEVICE HAVING A SPELL COMPLETION MARKER
DISPOSITIF DE VÉHICULE AVEC MARQUAGE POUR AUTOCOMPLÉTION

(30) Priorität: 12.03.2013 DE 102013004246
(43) Veröffentlichungstag der Anmeldung: 20.01.2016
(73) Patentinhaber: Audi AG, 85045 Ingolstadt (DE)
(72) Erfinder: BOUAZIZ, Tahar, 85055 Ingolstadt (DE); BETZ, Michael, 85080 Gaimersheim (DE); ANGELESCU, Emanuel, 50858 Köln (DE); KÖBERLE, Carolin, 85057 Ingolstadt (DE); STEINLE, Jürgen, 85049 Ingolstadt (DE)
(74) Vertreter: Brandt, Kai
(86) Internationale Anmeldenummer: PCT/EP2014/000579
(87) Internationale Veröffentlichungsnummer: WO 2014/139650

(56) Entgegenhaltungen:
- EP-A1- 1 081 582
- EP-A1- 1 081 582
- EP-A2- 1 120 633
- EP-A2- 1 120 633
- DE-A1-102005 029 781
- US-A- 6 011 542

## Beschreibung

Die vorliegende Erfindung betrifft eine einem Fahrzeug zugeordnete Vorrichtung mit Buchstabiereinrichtung.

In modernen Fahrzeugen (Kraftfahrzeugen) ist oftmals eine Anzahl an Vorrichtungen vorhanden, bei denen und/oder für die Benutzereingaben vorgenommen werden können. Hierbei können die Vorrichtungen nicht nur aktiviert oder deaktiviert, d.h. ein- und ausgeschaltet werden, sondern es können oftmals auch Einstellungen vorgenommen, Auswahlen getroffen oder Eingaben getätigt werden.

Beispiele für derartige Vorrichtungen in Fahrzeugen sind ein satellitengestütztes Navigationssystem, eine Multi-Media-Anlage, eine Automobil-Telefonanlage oder eine in ein Fahrzeug integrierte Vorrichtung für einen Internetzugang.

Die Benutzereingaben für derartige Vorrichtungen können auf verschiedene Arten und Weisen erfolgen, wobei derzeit eine Eingabe unter Verwendung eines Dreh-/Drück-Stellers, Joysticks oder einer oder mehrerer Tasten wohl die am häufigsten verwendete Vorgehensweise darstellt. Daneben sind weitere Eingabemöglichkeiten bekannt, wie beispielsweise unter Verwendung eines Touchpad oder einer berührungsempfindlichen Anzeigeeinrichtung (Bildschirm), oder mittels Spracheingabe. In allen Fällen kann eine Anzeige der vorgenommenen Einstellungen/Auswahlen/Eingaben auf einer Anzeigeeinrichtung (Bildschirm, Head-Up-Display) erfolgen.

Bei den oben erwähnten Vorrichtungen können oder müssen zur Bedienung eine Abfolge von Zeichen (Buchstaben, Zahlen, Leerzeichen, etc.) und oder Symbolen ausgewählt oder eingegeben werden, beispielsweise bei der Zieleingabe für ein satellitengestütztes Navigationssystem, der Eingabe einer neuen Kontaktperson in die oder der Auswahl einer bekannten Kontaktperson aus der Speichereinrichtung einer Automobil-Telefonanlage, bei der Bedienung einer Vorrichtung für einen mobilen Internetzugang, etc.

Hierbei ist eine rasche, einfache und bequeme Auswahl und Eingabe von Zeichen und/oder Symbolen erwünscht, in Bezug auf eine möglichst geringe Ablenkung vom Straßenverkehr sogar sehr erwünscht.

Es ist bekannt, dass für einen Nutzer eine Erleichterung und/oder Beschleunigung der Eingabe/Auswahl zur Verfügung gestellt werden kann, indem ihm nach der Eingabe/Auswahl von wenigstens einem Zeichen/Symbol eine Vervollständigung der bereits eingegebenen/ausgewählten Zeichen/Symbole angeboten und/oder angezeigt wird, wobei die Vorschläge für eine Vervollständigung nach vorgebbaren Kriterien aus einer in einer Speichereinrichtung gespeicherten Daten ausgewählt werden. In seiner einfachsten Form werden hierbei die Daten mit den bisher eingegebenen/ausgewählten Zeichen/Symbolen verglichen und nur solche Daten angezeigt, die die eingegebenen/ausgewählten Zeichen/Symbolen in der gleichen Reihenfolge enthalten.

Aus der DE 100 25 042 A 1 ist eine Vorrichtung zum Eingeben von Namen in ein Navigationssystem bekannt. Die Vorrichtung umfasst eine Speichereinheit zum Speichern von Namen mindestens einer Kategorie von Ortsangaben, eine Eingabeeinheit zum Auswählen eines Namens, eine Anzeigeeinheit zur Unterstützung der Eingabe, und eine Steuereinheit, die abhängig von einem vorgegebenen Sortierkriterium für die gespeicherten Namen einer Kategorie und abhängig von früheren Eingaben zur Auswahl des einzugebenden Namens auf der Anzeigeeinheit die Darstellung eines auswählbaren Namens als Vorschlag veranlasst. In der Steuereinheit dient die Auswahlwahrscheinlichkeit der Namen als Sortierkriterium, und als Maß für die Auswahlwahrscheinlichkeit wird mindestens eine statistisch erhobene oder messtechnisch erfasste Angabe über die örtlichen Gegebenheiten des mit dem Namen bezeichneten Gebietes herangezogen.

Die EP 1 455 163 A2 beschreibt ein Verfahren zur Strukturierung von Zielobjekten in einer Datenbank, bei dem die Zielobjekte unter Anwendung einer Zuordnungsfunktion einer Klasse zugeordnet werden, in der ähnliche Zielobjekte zusammengefasst sind. Eine Datenbankstruktur, bei der in Abhängigkeit von festlegbaren Ähnlichkeitskriterien einander ähnliche Zielobjekte in einer Klasse zusammengefasst sind, ist insbesondere bei der Zieleingabe bei Navigationssystemen anwendbar.

Die EP 1 359 393 A2 beschreibt ein Kraftfahrzeugnavigationssystem mit einer Recheneinheit, die mit einer Eingabeeinheit und einer Anzeigeeinheit sowie einem Speicherelement, das eine Datenbank mit Orts- und/oder Straßenbezeichnungen enthält, verbunden ist, wobei auf der Anzeigeeinheit sowohl Zeichen zur zeichenweise Eingabe einer Orts- oder Straßenbezeichnung als auch Auswahlvorschläge für eine Orts- oder Straßenbezeichnung angezeigt werden und die Auswahlvorschläge eine bereits zeichenweise eingegebenen Zeichenfolge als Anfangsbestandteil enthalten. Die angezeigten Auswahlvorschläge sind derart aus den Orts- und/oder Straßenbezeichnungen der Datenbank ausgewählt, dass sie sich in dem auf die bereits angegebene Zeichenfolge folgenden Zeichen unterscheiden. Weiterhin beschreibt die EP 1 359 393 A2 ein Verfahren zur Auswahl einer Bezeichnung, das insbesondere für den Einsatz in Navigationssystemen und Mobiltelefonen geeignet ist.

Die DE 10 2005 062 465 A1 hat ein Verfahren zur Auswahl eines Ortes zum Gegenstand, wobei in einer Anzeige zur Auswahl von Orten eine erste Liste und eine zweiten Liste von Orten zur Auswahl des Ortes aus einer der Listen dargestellt werden, wobei sich die jeweiligen Grundmengen der Orte, aus denen jeweils die Einträge der Listen bestimmt werden, unterscheiden. Der Anfang der Namen der Orte in beiden dargestellten Listen stimmt jeweils mit derselben, zuvor eingegebenen Zeichenkette überein.

Die EP 2 075 547 A2 beschreibt ein Verfahren und ein System zum Identifizieren eines von einem Nutzer gewünschten Ziels in einem Navigationssystem. Die Erfindung umfasst die Schritte des Speicherns von potentiell gewünschten Zielnamen in einer Datenbank, Bereitstellen einer On-Board-Dateneingabevorrichtung mit Dateneingabetasten für einen Nutzer, Empfangen aufeinanderfolgender Zeichen eines ersten Abschnitts des vom Nutzer gewünschten Ziels von der Dateneingabevorrichtung, Identifizieren von potentiell gewünschten Zielnamen auf Grundlage der von der Dateneingabevorrichtung erhaltenen aufeinanderfolgenden Zeichen, Identifizieren ungültiger Eingaben, die nicht Zeichen eines verbleibenden Teils der potentiell gewünschten Zielnamen entsprechen, und Deaktivieren der ungültigen Zeichen auf der Dateneingabevorrichtung, so dass sie durch den Nutzer nicht ausgewählt werden können.

Die DE 10 2009 021 124 A1 betrifft ein Bediensystem für ein Fahrzeug mit einer Eingabeeinheit, einer Ausgabeeinheit und einer Spellerfunktion, mit welcher Informationen zeichenweise in das Bediensystem eingebbar sind und ein eingegebenes Zeichen oder eine eingegebene Zeichenkette bei Übereinstimmung mit einem ersten Zeichen eines in dem Bediensystem gespeicherten Listeneintrags einer Informations- oder Unterhaltungsapplikation oder mit der Anfangszeichenkette eines solchen Listeneintrags das eingegebene Zeichen oder die eingegebene Zeichenkette entsprechend dem Listeneintrag vervollständigt oder teilvervollständigt und über die Ausgabeeinheit optisch ausgegeben wird. Bei einer Vervollständigung oder Teilvervollständigung eines eingegebenen Zeichens oder einer eingegebenen Zeichenkette zu einem Listeneintrag erfolgt zusätzlich zur optischen Anzeige der vervollständigten Zeichenkette eine akustische Rückmeldung.

Und die EP 1 120 633 A1 beschreibt ein Verfahren zur Eingabe von aus mindestens einem Zeichen eines Alphabets bestehenden Informationen in ein elektrisches Gerät, bei dem nach Eingabe eines Zeichens des Alphabets das Zeichen, oder für den Fall, dass vor dem eingegebenen Zeichen bereits ein oder mehrere Zeichen eingegeben worden sind, die aus den zuvor und dem zuletzt eingegebenen Zeichen gebildete Zeichenkette mit Informationen einer Vergleichsmenge von Informationen verglichen wird, und bei Übereinstimmung des Zeichens mit dem ersten Zeichen einer Information der Vergleichsmenge oder bei Übereinstimmung der Zeichenkette mit dem Beginn einer Information der Vergleichsmenge diese Information als einzugebende Information angeboten wird.

Es ist Aufgabe der vorliegenden Erfindung, eine Vorrichtung zur Verfügung zu stellen, mit der ein Nutzer auf einfache und rasche Weise eine von einer Vorrichtung zur Verfügung gestellte Vervollständigung von Zeichen und/oder Symbolen in ein Eingabefeld übernehmen kann.

Diese Aufgabe wird gelöst durch die Vorrichtung gemäß Anspruch 1. Vorteilhafte Weiterbildungen der Erfindung sind Gegenstand der Unteransprüche und ergeben sich aus der Beschreibung sowie den beigefügten Figuren.

Erfindungsgemäß wird eine einem Fahrzeug zugeordnete Vorrichtung vorgeschlagen, die eine Bedieneinrichtung aufweist, mit der wenigstens alphanumerische Zeichen und/oder Symbole auswählbar und zu einer Zeichen- oder Funktionsgruppe zusammenstellbar sind, und eine Anzeigevorrichtung, mit der mittels einer Anzeigeeinrichtung (z.B. einem Bildschirm, Head-Up-Display) auswählbare Zeichen und/oder Symbole in wenigstens einem Auswahlfeld, und ausgewählte Zeichen, Symbole, Zeichen- oder Funktionsgruppe in wenigstens einem Eingabefeld anzeigbar sind. Weiter weist die Vorrichtung eine Speichereinrichtung mit darin gespeicherten Daten auf, und eine Datenverarbeitungseinrichtung, mit der Daten aus den in der Speichereinrichtung gespeicherten Daten nach vorgebbaren Kriterien unter Berücksichtigung der bisher von einem Nutzer ausgewählten Zeichen und/oder Symbole ausgewählt werden können.

Die Vorrichtung ist dadurch gekennzeichnet, dass sie dazu eingerichtet ist, auf der Anzeigeeinrichtung eine Vervollständigungs-Kennzeichnung im Bereich des Auswahlfelds in unmittelbarer Nachbarschaft zu einem zuletzt von einem Nutzer ausgewählten Zeichen oder Symbol anzuzeigen, sofern durch die Datenverarbeitungseinrichtung eine mögliche Vervollständigung des/der bisher ausgewählten Zeichen(s) und/oder Symbols/Symbole auf Grundlage der Daten in der Speichereinrichtung unter Berücksichtigung des/der bisher von einem Nutzer ausgewählten Zeichen(s) und/oder Symbols/Symbole ermittelt wird; die Vervollständigungs-Kennzeichnung mittels der Bedieneinrichtung durch einen Nutzer anwählbar oder eine Auswahl-Kennzeichnung automatisch auf der Vervollständigungs-Kennzeichnung positionierbar ist; und ein angezeigter Vervollständigungs-Vorschlag von einem Nutzer mittels der Bedieneinrichtung ausgewählt werden kann.

Durch die Anzeige einer Vervollständigungs-Kennzeichnung im Bereich des Auswahlfelds in unmittelbarer Nachbarschaft, z.B. unmittelbar neben, über oder unter einem zuletzt von einem Nutzer ausgewählten Zeichen oder Symbol erhält der Nutzer zum einen genau in dem Bereich der Anzeigeeinrichtung, auf den er gerade blickt einen Hinweis darauf, dass von der Vorrichtung eine Vervollständigung des/der bisher ausgewählten Zeichen(s) und/oder Symbols/Symbole angeboten wird. Durch die räumliche Nähe dieser Anzeige zu dem zuletzt ausgewählten Zeichen oder Symbol ist auch eine möglicherweise erforderliche Bedienhandlung zum Anwählen der Vervollständigungs-Kennzeichnung sehr erleichtert und kann ein solches Anwählen auf rasche und einfache Weise erfolgen.

Hierdurch kann die Zeit und die Aufmerksamkeit, die ein Nutzer für die Eingabe in die Vorrichtung benötigt, auf vorteilhafte Weise verkürzt werden, was im Sinne einer möglichst geringen Ablenkung eines Nutzers vom Straßenverkehr ("driver distraction") auch unter Sicherheitsgesichtspunkten sehr erwünscht ist.

Gemäß einer ersten vorteilhaften Weiterbildung der Erfindung ist die Vorrichtung dazu eingerichtet die Vervollständigungs-Kennzeichnung unmittelbar rechts oder unmittelbar links neben dem zuletzt von einem Nutzer ausgewählten Zeichen oder Symbol anzuzeigen.

Gemäß einer zweiten vorteilhaften Weiterbildung der Erfindung ist die Vorrichtung dazu eingerichtet, dass für den Fall, dass die Vervollständigungs-Kennzeichnung mittels der Bedieneinrichtung durch einen Nutzer angewählt ist oder eine Auswahl-Kennzeichnung automatisch auf der Vervollständigungs-Kennzeichnung positioniert ist, zusätzlich zu der Vervollständigungs-Kennzeichnung und/oder der Auswahl-Kennzeichnung automatisch wenigstens ein Vervollständigungs-Vorschlag im Bereich des Eingabefelds angezeigt wird, wobei gegebenenfalls ein weiteres graphisches Element angezeigt wird, das sich vom Bereich der angezeigten Vervollständigungs-Kennzeichnung und/oder der Auswahl-Kennzeichnung bis hin zum Bereich des Vervollständigungs-Vorschlags erstreckt.

Gemäß einer dritten vorteilhaften Weiterbildung der Erfindung ist die Vorrichtung dazu eingerichtet, im Bereich des Auswahlfelds auch eine Lösch-Kennzeichnung in unmittelbarer Nachbarschaft zu dem zuletzt von einem Nutzer ausgewählten Zeichen oder Symbol anzuzeigen. Hierbei kann die erfindungsgemäße Vorrichtung dazu eingerichtet sein, im Bereich des Auswahlfelds unmittelbar rechts neben dem zuletzt von einem Nutzer ausgewählten Zeichen oder Symbol eine Vervollständigungs-Kennzeichnung und unmittelbar links neben dem zuletzt von einem Nutzer ausgewählten Zeichen oder Symbol eine Lösch-Kennzeichnung anzuzeigen.

Weiter kann die erfindungsgemäße Vorrichtung dazu eingerichtet sein, die Vervollständigungs-Kennzeichnung und/oder die Auswahl-Kennzeichnung in Form eines Cursor, eines waagerechten Strichs, einer Markierung und/oder Umrandung anzuzeigen.

Weitere Vorteile ergeben sich, wenn die Vorrichtung dazu eingerichtet ist, auswählbare Zeichen und/oder Symbole in dem wenigstens einem Auswahlfeld in einer einzeiligen, linearen Anordnung mittels der Anzeigeeinrichtung anzuzeigen. Ebenso ist es von Vorteil, wenn die Vorrichtung dazu eingerichtet ist, bestimmte Zeichen und/oder Symbole in Form von wenigstens einer Gruppe zusammenzufassen und die wenigstens eine Gruppe in dem Auswahlfeld in Form eines Gruppen-Symbols anzuzeigen.

Die Bedieneinrichtung der erfindungsgemäßen Vorrichtung kann wenigstens einen Dreh-Drück-Steller, Joy-Stick, ein Touchpad, eine berührungsempfindliche Anzeigeeinrichtung und/oder eine Vorrichtung zur Spracheingabe und Spracherkennung umfassen.

Die erfindungsgemäße Vorrichtung kann auch einen Smart-Speller umfassen, mittels dessen ein ausgewähltes Zeichen oder Symbol, oder eine Sequenz von ausgewählten Zeichen und/oder Symbolen mit in der Speichereinrichtung gespeicherten Daten verglichen werden kann, und die Vorrichtung dazu eingerichtet ist, nur noch solche Zeichen und/oder Symbole in dem wenigstens einem Auswahlfeld anzuzeigen, die aufgrund des/der ausgewählten Zeichen(s) oder Symbols/Symbole und den in der Speichereinrichtung vorhandenen Daten als nächste Zeichen und/oder Symbole in Frage kommen.

Die vorliegende Erfindung wird anhand der beigefügten Zeichnungen näher erläutert.
- Fig. 1:: Ein erstes Beispiel einer Anzeige auf der Anzeigeeinrichtung der erfindungsgemäßen Vorrichtung;
- Fig. 2:: Ein zweites Beispiel einer Anzeige auf der Anzeigeeinrichtung der erfindungsgemäßen Vorrichtung.

Die Darstellungen in den Figuren sind rein schematisch und nicht maßstabsgerecht. Innerhalb der Figuren sind gleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

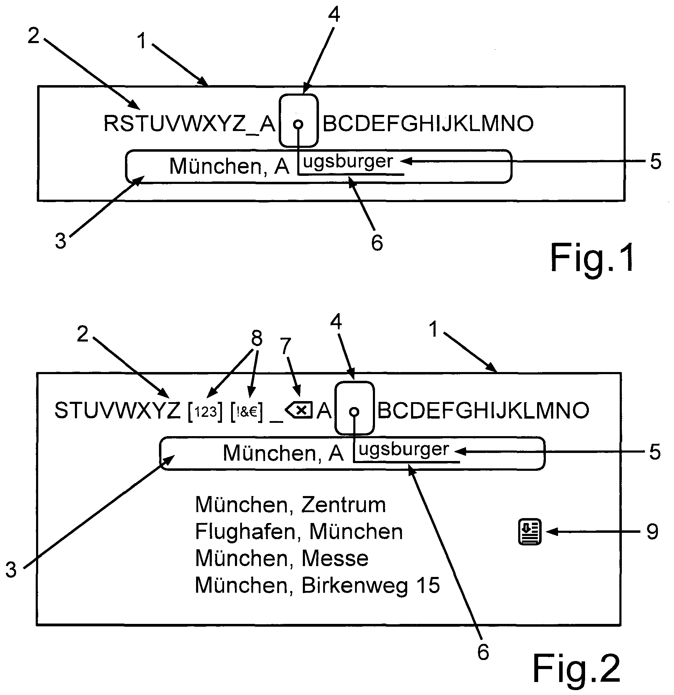

Wie in den Figuren 1 und 2 dargestellt ist, weist die Vorrichtung eine Anzeigeeinrichtung 1 auf. Auf der Anzeigeeinrichtung 1 sind auswählbare Zeichen und/oder Symbole in wenigstens einem Auswahlfeld 2, und ausgewählte Zeichen, Symbole, Zeichen- oder Funktionsgruppe in wenigstens einem Eingabefeld 3 anzeigbar. Mittels einer (in den Figuren nicht dargestellten) Bedieneinrichtung können Zeichen (Buchstaben, Zahlen, Leertaste) und Symbole (Prozent-Zeichen, Paragraphen-Zeichen, at-Zeichen, etc.) in dem Auswahlfeld 2 angewählt und anschließend ausgewählt werden. Ausgewählte Zeichen, Symbole, Zeichen- oder Funktionsgruppe können in dem wenigstens einem Eingabefeld 3 angezeigt werden.

Die Anordnung der Anzeige der Zeichen und Symbole in dem Auswahlfeld 2 ist nicht besonders beschränkt und es kann jede geeignete Anordnung gewählt sein. Bevorzugt werden die Zeichen und Symbole in einer einzeiligen, geradlinigen Anordnung auf der Anzeigeeinrichtung 1 angezeigt, wie dies in den Figuren 1 und 2 dargestellt ist.

Durch ein Betätigen der Bedieneinrichtung, beispielsweise einem Drehen eines Dreh-Drück-Stellers, einer Wisch-Bewegung auf einem Touchpad oder einem berührungsempfindlichen Bildschirm können Zeichen und Symbole aus dem Auswahlfeld 2 für eine Auswahl und Übernahme in das Eingabefeld 3 angewählt werden. Durch eine weitere Bedienhandlung können ein angewähltes Zeichen oder Symbol ausgewählt und anschließend in dem Eingabefeld 3 angezeigt werden. Das An- und Auswählen eines Zeichens oder Symbols kann selbstverständlich auch durch eine einzige Bedienhandlung erfolgen, beispielsweise wenn sich das auszuwählende Zeichen oder Symbol bereits bei einer Auswahl-Kennzeichnung angezeigt wird, oder wenn beispielsweise ein An- und Auswählen eines Zeichens oder Symbols durch einen Druck auf einen berührungsempfindlichen Bildschirm erfolgen kann.

Erfindungsgemäß ist vorgesehen, dass die Vorrichtung dazu eingerichtet ist, auf der Anzeigeeinrichtung 1 eine Vervollständigungs-Kennzeichnung 4 im Bereich des Auswahlfelds 2 in unmittelbarer Nachbarschaft zu einem zuletzt von einem Nutzer eingegebenen oder ausgewählten Zeichen oder Symbol anzuzeigen, sofern durch die Datenverarbeitungseinrichtung eine mögliche Vervollständigung des/der bisher ausgewählten Zeichen(s) und/oder Symbols/Symbole auf Grundlage der Daten in der Speichereinrichtung unter Berücksichtigung der bisher von einem Nutzer ausgewählten Zeichen und/oder Symbole ermittelt wird.

Bei den in der Speichereinrichtung der Vorrichtung vorhandenen Daten kann es sich beispielsweise um Ortsangaben (Ortschaften, Straßen/Plätze, Hausnummern, Firmennamen, "points of interest", etc.) für ein satellitengestütztes Navigationssystem handeln. Die obige Aufzählung ist nicht abschließend zu verstehen und es können die Daten in der Speichereinrichtung alle Daten umfassen, die mittels einer erfindungsgemäßen Vorrichtung auswählbar sind.

Die Kriterien, nach der mittels der Datenverarbeitungseinrichtung ermittelt wird, ob eine mögliche Vervollständigung des/der bisher ausgewählten Zeichen(s) und/oder Symbols/Symbole gegeben ist oder nicht, ist nicht besonders beschränkt und es können alle denkbaren und sinnvollen Kriterien hierfür angewandt werden. Einige der möglichen Kriterien sind oben im Bereich der Würdigung des Stands der Technik erwähnt.

Wird eine Vervollständigungs-Kennzeichnung 4 durch die Vorrichtung angezeigt, kann diese mittels der Bedieneinrichtung durch einen Nutzer angewählt werden oder es kann eine Auswahl-Kennzeichnung automatisch auf der Vervollständigungs-Kennzeichnung 4 positioniert werden.

Möchte der Nutzer eine Vervollständigung des/der bisher ausgewählten Zeichen(s) und/oder Symbols/Symbole nicht vornehmen oder den angezeigten Vervollständigungs-Vorschlag 5 nicht vornehmen, kann er selbstverständlich mittels der Bedieneinrichtung zum Beispiel weitere Zeichen oder Symbole an- und/oder auswählen. Nach jedem solchen Vorgang können dann von der Datenverarbeitungseinrichtung die bisher ausgewählten Zeichen und Symbole mit den in der Speichereinrichtung vorhandenen Daten abgeglichen werden. Ergibt sich durch diesen Abgleich wieder eine mögliche Vervollständigung, wird von der Vorrichtung erneut eine Vervollständigungs-Kennzeichnung 4 in unmittelbarer Nachbarschaft zu dem zuletzt von dem Nutzer ausgewählten Zeichen oder Symbol angezeigt.

In den Figuren 1 und 2 ist eine Situation dargestellt, bei der durch einen Nutzer die Vervollständigungs-Kennzeichnung 4 angewählt oder eine Auswahl-Kennzeichnung automatisch auf der Vervollständigungs-Kennzeichnung 4 positioniert wurde.

Die Auswahl-Kennzeichnung und/oder die Vervollständigungs-Kennzeichnung 4 können erfindungsgemäß optional auf die gleiche Weise angezeigt werden, beispielsweise in Form eines Cursors, eines waagerechten Strichs, einer Markierung und/oder Umrandung. Wahlweise kann die Größe und/oder die Farbe, mit der die Auswahl-Kennzeichnung und die Vervollständigungs-Kennzeichnung 4 angezeigt werden, unterschiedlich sein. Durch eine unterschiedliche Darstellung von Auswahl-Kennzeichnung und Vervollständigungs-Kennzeichnung 4 ist es für einen Nutzer zum Beispiel einfacher zu erkennen, ob eine Vervollständigungs-Kennzeichnung 4 angewählt wurde oder nicht.

In den in den Figuren 1 und 2 dargestellten Beispielen wird die Vervollständigungs-Kennzeichnung 4 unmittelbar rechts neben dem zuletzt von einem Nutzer ausgewählten Zeichen (hier: A) angezeigt. Dies ist jedoch nicht zwingend, und die Vervollständigungs-Kennzeichnung 4 kann auch unmittelbar links, unmittelbar oberhalb oder unmittelbar unterhalb von einem zuletzt von einem Nutzer ausgewählten Zeichen oder Symbol angezeigt werden.

Bei Schriften, die von links nach rechts geschrieben werden, wird es sich anbieten, die Vervollständigungs-Kennzeichnung 4 unmittelbar rechts neben einem zuletzt von einem Nutzer ausgewählten Zeichen oder Symbol anzuzeigen, da diese Position der "Schreibrichtung" entspricht. Bei Schriften, die von rechts nach links geschrieben werden, wird es sich anbieten, die Vervollständigungs-Kennzeichnung 4 entsprechend unmittelbar links neben einem zuletzt von einem Nutzer ausgewählten Zeichen oder Symbol anzuzeigen.

Wie ebenfalls in den Figuren 1 und 2 dargestellt ist, kann, sofern die Vervollständigungs-Kennzeichnung 4 mittels der Bedieneinrichtung durch einen Nutzer angewählt worden oder wurde die Auswahl-Kennzeichnung automatisch auf der Vervollständigungs-Kennzeichnung 4 positioniert, zusätzlich zu der Vervollständigungs-Kennzeichnung 4 und/oder der Auswahl-Kennzeichnung automatisch ein Vervollständigungs-Vorschlag 5 im Bereich des Eingabefelds 3 angezeigt werden.

In den in den Figuren 1 und 2 dargestellten Beispielen umfasst die vorgeschlagene Vervollständigung die Zeichenfolge "ugsburg". Durch eine Annahme der vorgeschlagenen Vervollständigung würde so das bereits ausgewählte Zeichen "A" zum Ortsnamen "Augsburg" vervollständigt.

Weiter ist es erfindungsgemäß optional möglich, dass ein graphisches Element 6 angezeigt wird, das sich vom Bereich der angezeigten Auswahl-Kennzeichnung oder Vervollständigungs-Kennzeichnung 4 bis hin zum Bereich des Vervollständigungs-Vorschlags 5 erstreckt. Im in den Figuren 1 und 2 gezeigten Beispiel ist dieses graphische Element 6 ein kleiner Kreis mit einem daran anschließenden Strich, der sich zuerst senkrecht nach unten und links neben der vorgeschlagenen Vervollständigung und dann unterhalb der vorgeschlagenen Vervollständigung nach rechts erstreckt.

Dieses graphische Element 6 soll dazu dienen, eine "optische" Verbindung zwischen der angezeigten Auswahl-Kennzeichnung oder Vervollständigungs-Kennzeichnung 4 und vorgeschlagenen Vervollständigung zu schaffen, entlang derer der Blick eines Nutzers auf vorteilhafte Weise von der angezeigten Auswahl-Kennzeichnung oder Vervollständigungs-Kennzeichnung 4 zu der vorgeschlagenen Vervollständigung geleitet wird.

In bevorzugter Weise umfasst ein angezeigter Vervollständigungs-Vorschlag 5 nur wenige auswählbare Elemente, bevorzugt nicht mehr als drei, noch bevorzugter nicht mehr als zwei, und besonders bevorzugt nur ein Element. Hierdurch wird die Zeit, die für ein Erkennen und eine Auswahl eines vorgeschlagenen Elements durch einen Nutzer erforderlich ist, in vorteilhafter Weise auf eine Minimum reduziert. Ein Beispiel, bei dem der Vervollständigungs-Vorschlag nur ein Element aufweist, ist in den Figuren 1 und 2 dargestellt.

Für den Fall, dass mehr als beispielsweise zwei oder drei Vorschläge für eine Vervollständigung durch die Datenverarbeitungseinrichtung ermittelt werden, kann dies durch die Anzeige einer Auswahllisten-Kennzeichnung 9 kenntlich gemacht werden, wobei nach An- und Auswahl dieser Auswahllisten-Kennzeichnung 9 eine Auswahlliste angezeigt werden kann. Ein Beispiel hierfür ist in Fig. 2 dargestellt.

Wie in Fig. 2 ebenfalls dargestellt ist, kann erfindungsgemäß wahlweise im Bereich des Auswahlfelds 2 auch eine Lösch-Kennzeichnung 7 in unmittelbarer Nachbarschaft zu dem zuletzt von einem Nutzer ausgewählten Zeichen oder Symbol angezeigt werden. Auch bezüglich der Lösch-Kennzeichnung 7 wird deren Positionierung in vorteilhafter Weise entsprechend der Schreibrichtung gewählt werden. So wird bevorzugter Weise bei einer Schrift, die von links nach rechts geschrieben wird, im Bereich des Auswahlfelds 2 unmittelbar rechts neben dem zuletzt von einem Nutzer ausgewählten Zeichen oder Symbol eine Vervollständigungs-Kennzeichnung 4 und unmittelbar links neben dem zuletzt von einem Nutzer ausgewählten Zeichen oder Symbol eine Lösch-Kennzeichnung 7 angezeigt werden.

Soweit in der vorliegenden Anmeldung die Begriffe "in unmittelbarer Nachbarschaft" oder "unmittelbar links", "unmittelbar rechts", "unmittelbar oberhalb" oder "unmittelbar unterhalb" verwendet wird, ist darunter zu verstehen, dass zwischen dem zuletzt ausgewählten Zeichen oder Symbol und einer Vervollständigungs-Kennzeichnung 4 und/oder einer Lösch-Kennzeichnung 7 entweder keine anderen Elemente angezeigt werden oder lediglich ein oder einige wenige graphische Elemente, die zur besseren Kenntlichmachung von ausgewähltem Zeichen oder Symbol, der Vervollständigungs-Kennzeichnung 4, der Lösch-Kennzeichnung 7 und/oder der Korrelation zwischen ausgewähltem Zeichen oder Symbol und Vervollständigungs-Kennzeichnung 4 dienen, angezeigt werden.

Weiter kann die erfindungsgemäße Vorrichtung dazu eingerichtet sein, bei einem mittels der Bedieneinrichtung angewählten, in/bei einer Auswahlkennzeichnung angezeigten Buchstaben-Zeichen anzuzeigen, dass zu dem Buchstaben-Zeichen wenigstens eine Abwandlung mit einem diakritischen Zeichen existiert.

Wenn beispielsweise aufgrund der für die Vorrichtung gewählten Sprache zu einem Buchstaben (z.B. A) ein Umlaut (z.B. Ä) und Abwandlungen unter Verwendung eines Accent (z.B. Á und À) existieren, kann dieser Umstand erfindungsgemäß angezeigt werden, beispielsweise durch eine Anzeige der Abwandlungen in einer im Vergleich zum angewählten Buchstaben-Zeichen verkleinerten Darstellung oberhalb des Buchstaben-Zeichens. Die Art und Weise der Anzeige, dass zu dem Buchstaben-Zeichen Abwandlungen existieren, ist jedoch nicht auf diese Anzeigeart beschränkt und kann auf jede geeignete andere Weise erfolgen.

Die Abwandlungen können beispielsweise durch eine spezielle Weise der Bedienung der Bedieneinrichtung aufgerufen und anschließend wenigstens einer der Abwandlungen ausgewählt werden.

Beispielsweise kann bei einem Buchstaben, zu dem wenigstens eine Abwandlung mit einem diakritischen Zeichen existiert, die Zeichenerweiterung durch einen Longpush/Longpress auf den Buchstaben innerhalb des Zeichen-/Symbolbandes aktiviert werden. Die Anzeige des Zeichen-/Symbolbands wird dann um die jeweiligen zu dem Buchstaben gehörigen Zeichen erweitert. Nach Auswahl eines beliebigen dieser Zeichen, beispielsweise durch einen erneuten Longpush/Longpress auf das Zeichen, wird die Anzeige des Zeichen-/Symbolbands wieder auf die Grundzeichen reduziert.

In vielen Fällen kann der Platz für eine ausreichend große Anzeige aller zur Verfügung stehender Zeichen und/oder Symbole auf der Anzeigeeinrichtung 1 nicht ausreichen, so dass für eine Auswahl ein "Herein-Scrollen" von ursprünglich nicht auf der Anzeigeeinrichtung 1 angezeigten Zeichen und/oder Symbolen und ein "Heraus-Scrollen" von ursprünglich auf der Anzeigeeinrichtung 1 angezeigten Zeichen und/oder Symbolen erforderlich ist (z.B. in Form eines erweiterbaren Zeichen-/Symbolbands).

Das Zeichen-/Symbolband kann hierbei über einen Anfgangs- und einen Endanschlag verfügen, beispielsweise einen Anfangsanschlag beim Buchstaben "A" und einen Endanschlag bei der Ziffer "9". Um von einem solchen Anfangs- oder Endanschlag zeitsparend an das jeweils andere Ende des Zeichen-/Symbolbandes gelangen zu können, kann ein Cursorsprung vorgesehen sein. Wird an den jeweiligen Anfang oder das Ende des Zeichen-/Symbolbands gescrollt, wird beispielsweise der Cursor kurz abgefangen und gestoppt; nach einem erneuten Scrollen in die gleiche Richtung wie zuvor, kann dann beispielsweise durch eine "Wrap around Animation" der Cursor aus dem sichtbaren Bereich animiert und auf der anderen Seite des Zeichen-/Symbolbandes wieder eingeblendet werden.

Ein Herein-Scrollen und Heraus-Scrollen ist in vielen Fällen reduzier- oder sogar vermeidbar, wenn bestimmte Zeichen und/oder Symbole in Form von wenigstens einer Gruppe zusammengefasst und jede Gruppe mit Hilfe eines Gruppen-Symbols 8 in dem Auswahlfeld 2 angezeigt wird.

Wie in Fig. 2 gezeigt, kann eine erste Gruppe beispielsweise die Ziffern 0 bis 9 und eine zweite Gruppe eine Anzahl an Symbolen (!, &, €, %, §, *, etc.) umfassen. Es sollte für die Anzeige einer Gruppe ein geeignetes Gruppen-Symbol 8 gewählt werden, d.h. eine Anzeige, durch die für einen Nutzer möglichst leicht erkennbar ist, welche Elemente in der Gruppe enthalten sind (im in Fig. 2 gezeigten Beispiel "[123]" für die Gruppe der Ziffern 0 bis 9, und "[!&€]" für die Gruppe der anwähl- und auswählbaren Symbole). Eine Gruppe kann beispielsweise durch eine spezielle Art und Weise der Bedienung der Bedieneinrichtung aufgerufen und anschließend wenigstens ein Element der Gruppe ausgewählt werden. Diesbezüglich können beispielsweise die gleichen Bedienhandlungen vorgesehen sein, wie sie oben in Bezug auf die Zeichenerweiterung aufgrund von diakritischen Zeichen beschrieben sind.

Die bei der erfindungsgemäßen Vorrichtung vorgesehene Bedieneinrichtung ist nicht besonders beschränkt und es kann jede geeignete Bedieneinrichtung vorgesehen sein. Die Bedieneinrichtung umfasst beispielsweise wenigstens einen Dreh-Drück-Steller, Joy-Stick, ein Touchpad, eine berührungsempfindliche Anzeigeeinrichtung und/oder eine Vorrichtung zur Spracheingabe und Spracherkennung. Es können gleichzeitig ein oder mehrere der gleichen Bedieneinrichtungen oder eine Kombination von verschiedenen Bedieneinrichtungen vorgesehen sein. Ist die Bedieneinrichtung eine berührungsempfindliche Anzeigeeinrichtung können Bedieneinrichtung und Anzeigeeinrichtung 1 der Vorrichtung identisch sein.

Als ein bevorzugtes Beispiel für eine Bedieneinrichtung der erfindungsgemäßen Vorrichtung sei ein Dreh-Drück-Steller erwähnt, der wenigstens um eine Drehachse dreh- und betätigbar ist. Durch Drehen eines solchen Dreh-Drück-Stellers kann beispielsweise ein Zeichen, ein Symbol oder eine Gruppe angewählt werden und durch Drücken des Dreh-Drück-Stellers das angewählte Zeichen oder Symbol ausgewählt werden oder die Gruppe geöffnet (expandiert) werden. In gleicher Weise kann beispielsweise eine Lösch-Kennzeichnung 7 an- und ausgewählt werden.

Die Bedienmöglichkeiten eines Dreh-Drück-Stellers werden noch erweitert, wenn dieser in wenigstens einer Richtung senkrecht zur Drehachse verschieb- und betätigbar ist. Eine derartige Bedieneinrichtung wird oftmals auch als "Joy-Stick" bezeichnet. Die sich so ergebenden zusätzlichen Be-dienmöglichkeiten können beispielsweise in vorteilhafter Weise dazu verwendet werden, eine Auswahllisten-Kennzeichnung 9 an- und auszuwählen und einen Zugriff auf eine Auswahlliste zu ermöglichen. Eine mögliche Anzeige einer Auswahllisten-Kennzeichnung 9 und einer Auswahlliste (bzw. eines Ausschnitts davon), wie sie von der erfindungsgemäßen Vorrichtung ebenfalls anzeigbar sind, ist in Fig. 2 dargestellt.

Die erfindungsgemäße Vorrichtung kann auch einen sog. "Smart-Speller" umfassen. Mittels eines solchen "Smart-Speller" kann ein ausgewähltes Zeichen oder Symbol, oder eine Sequenz von ausgewählten Zeichen und/oder Symbolen mit in der Speichereinrichtung gespeicherten Daten verglichen werden kann und es können nur noch solche Zeichen und/oder Symbole in dem wenigstens einem Auswahlfeld 2 angezeigt werden, die aufgrund des/der ausgewählten Zeichen(s) oder Symbols/Symbole und den in der Speichereinrichtung vorhandenen Daten als nächste Zeichen und/oder Symbole in Frage kommen.

Dabei kann für das "in Frage kommen" wenigstens ein Auswahlkriterium vorgegeben sein, beispielsweise dass eine Übereinstimmung zwischen dem ausgewählten Zeichen oder Symbol, oder einer Sequenz von ausgewählten Zeichen und/oder Symbolen und einem Zeichen oder Symbol oder einer Sequenz von Zeichen und/oder Symbolen innerhalb wenigstens eines Datenelements bei den in der Speichereinrichtung vorhandenen Daten vorhanden sein muss. Wenn beispielsweise bezüglich einiger Datenelemente (z.B. Ortsnamen, Straßennamen, Vornamen, Nachnamen, Telefonnummern, E-Mail-Adressen, etc.) eine solche Übereinstimmung gegeben ist, werden durch den Smart-Speller nur noch die Zeichen und/oder Symbole in dem Auswahlfeld angezeigt, die für eine Vervollständigung der in Frage kommenden Datenelemente erforderlich sind.

Hierdurch ergibt sich für einen Nutzer eine Erleichterung bei der Anwahl und Auswahl des/der nächsten Zeichen(s) oder Symbols/Symbole und es wird die Gefahr eine Fehlanwahl und/oder Fehlauswahl verringert.

Auf der Anzeigeeinrichtung 1 der erfindungsgemäßen Vorrichtung können selbstverständlich weitere Elemente angezeigt werden, wie beispielsweise ein Hinweis- oder Hilfetext, ein Icon, bei dessen Auswahl Optionen der Vorrichtung konfigurierbar sind, die oben bereits erwähnten Elemente einer zur Verfügung stehenden Auswahlliste und/oder eine Auswahllisten-Kennzeichnung 9 (Listenauswahl-Schaltfläche), etc, wie sie teilweise in Fig. 2 gezeigt sind. Diese Elemente können ebenfalls mittels entsprechender Bedienhandlungen aktivierbar sein.

Weiter kann auch vorgesehen sein, dass nach Auswahl eines Zeichens oder Symbols unmittelbar benachbart zu einer Auswahlkennzeichnung eine Löschschaltfläche 7 angezeigt wird, die mittels der Bedieneinrichtung zum Löschen von wenigstens dem zuletzt ausgewählten, in einem Eingabefeld angezeigten Zeichen oder Symbol betätigbar ist.

Unter "unmittelbar benachbart" ist zu verstehen, das zwischen der Löschschaltfläche 7 und der Auswahlkennzeichnung kein weiteres Zeichen oder Symbol angezeigt wird. Die Löschschaltfläche 7 kann grundsätzlich an jeder geeigneten Position unmittelbar benachbart zur Auswahlkennzeichnung angezeigt werden, also beispielsweise unmittelbar links, rechts, oberhalb oder unterhalb der Auswahlkennzeichnung.

Die in den Figuren 1 und 2 dargestellten Beispiele beziehen sich auf ein Navigationssystem. Die vorliegende Erfindung ist selbstverständlich nicht auf die Anwendung bei einem Navigationssystem beschränkt sondern kann für alle Arten von einem Fahrzeug zugeordneten Vorrichtungen verwendet werden, bei denen das Anwählen und Auswählen von Zeichen und/oder Symbolen vorkommt oder vorkommen kann, wie beispielsweise eine Multi-Media-Anlage, eine Automobil-Telefonanlage oder ein in einem Fahrzeug integrierte Vorrichtung für einen Internetzugang.

Da einem Fachmann bekannt ist, wie die erfindungsgemäße Vorrichtung, die Anzeigevorrichtung mit der Anzeigeeinrichtung 1 (z.B. Bildschirm, Head-Up-Display) aufgebaut sein kann und wie die Komponenten der Vorrichtung zusammenwirken müssen, damit die erfindungsgemäße Vorrichtung die in der vorliegenden Anmeldung beschriebenen Eigenschaften aufweist, braucht im vorliegenden Fall hierauf nicht näher eingegangen zu werden.

Durch die Anzeige der Vervollständigungs-Kennzeichnung 4 in unmittelbarer Nachbarschaft zu einem zuletzt von einem Nutzer eingegebenen oder ausgewählten Zeichen oder Symbol wird einem Nutzer der erfindungsgemäßen Vorrichtung eine optimale Möglichkeit zum Anwählen einer von der Vorrichtung angebotenen Vervollständigung von wenigstens einem bereits ausgewählten Zeichen oder Symbol und der Übernahme der Vervollständigung in ein Eingabefeld 3 an die Hand gegeben.

Hierdurch ergibt sich eine optimale Unterstützung für den Nutzer. Auch verringert sich die Zeitdauer und die Aufmerksamkeit, die ein Nutzer für den Auswahl-/Eingabevorgang benötigt, wodurch eine im Sinne der Verkehrssicherheit unerwünschte Ablenkung des Fahrers vom Straßenverkehr minimiert wird.

## Patentansprüche

1. Navigationsvorrichtung mit einer Bedieneinrichtung, mit der wenigstens alphanumerische Zeichen und/oder Symbole auswählbar und zu einer Zeichen- oder Funktionsgruppe zusammenstellbar sind, und mit einer Anzeigevorrichtung, mit der mittels einer Anzeigeeinrichtung (1) auswählbare Zeichen und/oder Symbole in wenigstens einem Auswahlfeld (2) und ausgewählte Zeichen, Symbole, Zeichen- oder Funktionsgruppen in wenigstens einem Eingabefeld (3) anzeigbar sind, einer Speichereinrichtung mit darin gespeicherten Daten, und einer Datenverarbeitungseinrichtung zum Auswählen von Daten aus den in der Speichereinrichtung gespeicherten Daten nach vorgebbaren Kriterien unter Berücksichtigung der bisher von einem Nutzer ausgewählten Zeichen und/oder Symbole
**dadurch gekennzeichnet, dass**
die Vorrichtung dazu eingerichtet ist,
auf der Anzeigeeinrichtung (1) eine Vervollständigungs-Kennzeichnung (4) in Form eines Cursor, eines waagerechten Strichs, einer Markierung und/oder Umrandung im Bereich des Auswahlfelds (2) in unmittelbarer Nachbarschaft zu einem zuletzt von einem Nutzer ausgewählten und im Auswahlfeld (2) angezeigten Zeichen oder Symbol anzuzeigen, sofern durch die Datenverarbeitungseinrichtung eine mögliche Vervollständigung des/der bisher ausgewählten Zeichen(s) und/oder Symbols/Symbole auf Grundlage der Daten in der Speichereinrichtung unter Berücksichtigung des/der bisher von einem Nutzer ausgewählten Zeichen(s) und/oder Symbols/Symbole ermittelt wird; die Vervollständigungs-Kennzeichnung (4) mittels der Bedieneinrichtung durch einen Nutzer anwählbar oder eine Auswahl-Kennzeichnung automatisch auf der Vervollständigungs-Kennzeichnung (4) positionierbar ist;
ein angezeigter Vervollständigungs-Vorschlag (5) von einem Nutzer mittels der Bedieneinrichtung ausgewählt werden kann, und
für den Fall, dass die Vervollständigungs-Kennzeichnung (4) mittels der Bedieneinrichtung durch einen Nutzer angewählt ist oder eine Auswahl-Kennzeichnung automatisch auf der Vervollständigungs-Kennzeichnung (4) positioniert ist,
zusätzlich zu der Vervollständigungs-Kennzeichnung (4) automatisch wenigstens ein Vervollständigungs-Vorschlag (5) im Bereich des Eingabefelds (3) angezeigt wird, wobei ein weiteres graphisches Element (6) angezeigt wird, das sich vom Bereich der angezeigten Vervollständigungs-Kennzeichnung (4) bis hin zum Bereich des wenigstens einen Vervollständigungs-Vorschlags (5) erstreckt.

2. Vorrichtung gemäß Anspruch 1,
**dadurch gekennzeichnet, dass**
die Vorrichtung dazu eingerichtet ist,
die Vervollständigungs-Kennzeichnung (4) unmittelbar rechts oder unmittelbar links neben dem zuletzt von einem Nutzer ausgewählten Zeichen oder Symbol anzuzeigen.

3. Vorrichtung gemäß einem der vorhergehenden Ansprüche,
**dadurch gekennzeichnet, dass**
die Vorrichtung dazu eingerichtet ist,
im Bereich des Auswahlfelds (2) auch eine Lösch-Kennzeichnung (7) in unmittelbarer Nachbarschaft zu dem zuletzt von einem Nutzer ausgewählten Zeichen oder Symbol anzuzeigen.

4. Vorrichtung gemäß Anspruch 3,
**dadurch gekennzeichnet, dass**
die Vorrichtung dazu eingerichtet ist,
im Bereich des Auswahlfelds (2) unmittelbar rechts neben dem zuletzt von einem Nutzer ausgewählten Zeichen oder Symbol eine Vervollständigungs-Kennzeichnung (4) und unmittelbar links neben dem zuletzt von einem Nutzer ausgewählten Zeichen oder Symbol eine Lösch-Kennzeichnung (7) anzuzeigen.

5. Vorrichtung gemäß einem der vorhergehenden Ansprüche,
**dadurch gekennzeichnet, dass**
die Vorrichtung dazu eingerichtet ist,
die Auswahl-Kennzeichnung in Form eines Cursors, eines waagerechten Strichs, einer Markierung und/oder Umrandung anzuzeigen.

6. Vorrichtung gemäß einem der vorhergehenden Ansprüche,
**dadurch gekennzeichnet, dass**
die Vorrichtung dazu eingerichtet ist,
auswählbare Zeichen und/oder Symbole in dem wenigstens einen Auswahlfeld (2) in einer einzeiligen, linearen Anordnung mittels der Anzeigeeinrichtung (1) anzuzeigen.

7. Vorrichtung gemäß einem der vorhergehenden Ansprüche,
**dadurch gekennzeichnet, dass**
die Vorrichtung dazu eingerichtet ist,
bestimmte Zeichen und/oder Symbole in Form von wenigstens einer Gruppe zusammenzufassen und die wenigstens eine Gruppe in dem Auswahlfeld (2) in Form eines Gruppen-Symbols (8) anzuzeigen.

8. Vorrichtung gemäß einem der vorhergehenden Ansprüche,
**dadurch gekennzeichnet, dass**
die Bedieneinrichtung wenigstens einen Dreh-Drück-Steller, Joy-Stick, ein Touchpad, eine berührungsempfindliche Anzeigeeinrichtung und/oder eine Vorrichtung zur Spracheingabe und Spracherkennung umfasst.

9. Vorrichtung gemäß einem der vorhergehenden Ansprüche,
**dadurch gekennzeichnet, dass**
sie einen Smart-Speller umfasst, mittels dessen ein ausgewähltes Zeichen oder Symbol, oder eine Sequenz von ausgewählten Zeichen und/oder Symbolen mit in der Speichereinrichtung gespeicherten Daten verglichen werden kann und
die Vorrichtung dazu eingerichtet ist, nur noch solche Zeichen und/oder Symbole in dem wenigstens einem Auswahlfeld (2) anzuzeigen, die aufgrund des/der ausgewählten Zeichen(s) oder Symbols/Symbole und den in der Speichereinrichtung vorhandenen Daten als nächstes Zeichen und/oder Symbol in Frage kommen.

## Claims

1. Navigation device with an operating unit, by means of which at least alphanumerical characters and/or symbols can be selected and combined to form a character or function group, and with a display device by means of which using a display unit (1), selectable characters and/or symbols can be displayed in at least one selection field (2) and selected characters, symbols, character or function groups can be displayed in at least one input field (3), with a storage device with data stored therein, and with a data processing unit for selecting data from data stored in the storage device, on the basis of predeterminable criteria and taking into consideration the characters and/or symbols selected so far by a user,
**characterised in that**
the device is set up
to display on the display unit (1) a completion designation (4) in the form of a cursor, a horizontal line, a marking and/or frame in the area of the selection field (2) in the immediate vicinity of a character or symbol selected most recently by a user and displayed in the selection field (2), provided that a possible completion of the character(s) and/or symbol(s) selected so far is determined by the data processing unit on the basis of the data in the storage device and taking into consideration the character(s) and/or symbol(s) selected by a user so far,
the completion designation (4) can be selected by a user using the operating unit or a selection designation can be positioned automatically on the completion designation (4),
a displayed completion suggestion (5) can be selected by a user using the operating unit, and
in the case where the completion designation (4) is selected by a user using the operating unit or a selection designation is automatically positioned on the completion designation (4),
in addition to the completion designation (4) at least one completion suggestion (5) is displayed automatically in the area of the input field (3), wherein an additional graphic element (6) is displayed, which extends from the area of the displayed completion designation (4) to the area of the at least one completion suggestion (5).

2. Device according to claim 1,
**characterised in that**
the device is set up
to display the completion designation (4) immediately to the right or immediately to the left next to the character or symbol selected most recently by a user.

3. Device according to any of the preceding claims,
**characterised in that**
the device is set up
to also display in the area of the selection field (2) a deletion designation (7) in the immediate vicinity of the character or symbol selected most recently by a user.

4. Device according to claim 3,
**characterised in that**
the device is set up
to display in the area of the selection field (2) a completion designation (4) immediately to the right next to the character or symbol selected most recently by a user and a deletion designation (7) immediately to the left next to the character or symbol selected most recently by a user.

5. Device according to any of the preceding claims,
**characterised in that**
the device is set up
to display the selection designation in the form of a cursor, a horizontal line, a marking and/or frame.

6. Device according to any of the preceding claims,
**characterised in that**
the device is set up
to display selectable characters and/or symbols in the at least one selection field (2) in a single-row, linear arrangement using the display unit (1).

7. Device according to any of the preceding claims,
**characterised in that**
the device is set up
to combine certain characters and/or symbols in the form of at least one group and to display the at least one group in the selection field (2) in the form of a group symbol (8).

8. Device according to any of the preceding claims,
**characterised in that**
the operating unit comprises at least one turn/push knob, joystick, touchpad, touch-sensitive display unit and/or device for voice input and voice recognition.

9. Device according to any of the preceding claims,
**characterised in that**
it comprises a smart speller, by means of which a selected character or symbol or a sequence of selected characters and/or symbols can be compared with data stored in the storage device, and
the device is set up in order only to display in the at least one selection field (2) those characters and/or symbols which are eligible as the next character and/or symbol on the basis of the selected character(s) or symbol(s) and on the basis of the data available in the storage device.

## Revendications

1. Dispositif de navigation avec un dispositif de commande, avec lequel au moins des caractères alphanumériques et/ou symboles peuvent être sélectionnés et combinés en un groupe de caractères ou de fonctions, et avec un dispositif affichage, avec lequel des caractères et/ou symboles sélectionnables au moyen d'un dispositif d'affichage (1) peuvent être affichés dans au moins un champ de sélection (2) et des caractères, symboles, groupes de caractères ou groupes de fonctions sélectionnés peuvent être affichés dans au moins un champ de saisie (3), un dispositif de mémoire avec des données qui y sont stockées, et un dispositif de traitement de données pour la sélection de données à partir des données stockées dans le dispositif de mémoire selon des critères prédéfinissables en tenant compte des caractères et/ou symboles sélectionnés jusqu'à présent par un utilisateur
**caractérisé en ce que**
le dispositif est aménagé
pour afficher sur le dispositif d'affichage (1) une identification de complétion (4) sous la forme d'un curseur, d'un trait horizontal, d'un marquage et/ou bordure dans la zone du champ de sélection (2) à proximité immédiate d'un caractère ou symbole sélectionné en dernier par un utilisateur et affiché dans le champ de sélection (2), si une possible complétion du/des caractère(s) et/ou symbole(s) sélectionné(s) jusqu'à présent est déterminée sur la base des données dans le dispositif de mémoire en tenant compte du/des caractère(s) et/ou symbole(s) sélectionné(s) jusqu'à présent par un utilisateur par le dispositif de traitement de données ;
l'identification de complétion (4) peut être sélectionnée par un utilisateur au moyen du dispositif de commande ou une identification de sélection peut être positionnée automatiquement sur l'identification de complétion (4) ;
une suggestion de saisie (5) affichée peut être sélectionnée par un utilisateur au moyen du dispositif de commande, et
au cas où l'identification de complétion (4) est sélectionnée par un utilisateur au moyen du dispositif de commande ou une identification de sélection est positionnée automatiquement sur l'identification de complétion (4),
en plus de l'identification de complétion (4), au moins une suggestion de saisie (5) est affichée automatiquement dans la zone du champ de saisie (3), dans lequel un autre élément graphique (6) est affiché, qui s'étend de la zone de l'identification de complétion (4) affichée jusqu'à la zone de l'au moins une suggestion de saisie (5).

2. Dispositif selon la revendication 1,
**caractérisé en ce que**
le dispositif est aménagé
pour afficher l'identification de complétion (4) directement à droite ou directement à gauche à côté du caractère ou symbole sélectionné en dernier par un utilisateur.

3. Dispositif selon l'une quelconque des revendications précédentes,
**caractérisé en ce que**
le dispositif est aménagé
pour afficher dans la zone du champ de sélection (2), également une identification de suppression (7) à proximité immédiate du caractère ou symbole sélectionné en dernier par un utilisateur.

4. Dispositif selon la revendication 3,
**caractérisé en ce que**
le dispositif est aménagé
pour afficher dans la zone du champ de sélection (2) directement à droite à côté du caractère ou symbole sélectionné en dernier par un utilisateur, une identification de complétion (4) et directement à gauche à côté du caractère ou symbole sélectionné en dernier par un utilisateur, une identification de suppression (7).

5. Dispositif selon l'une quelconque des revendications précédentes,
**caractérisé en ce que**
le dispositif est aménagé
pour afficher l'identification de sélection sous la forme d'un curseur, d'un trait horizontal, d'un marquage et/ou d'une bordure.

6. Dispositif selon l'une quelconque des revendications précédentes,
**caractérisé en ce que**
le dispositif est aménagé
pour afficher des caractères et/ou symboles sélectionnables dans l'au moins un champ de sélection (2) dans un agencement linéaire sur une ligne au moyen du dispositif d'affichage (1).

7. Dispositif selon l'une quelconque des revendications précédentes,
**caractérisé en ce que**
le dispositif est aménagé
pour regrouper des caractère et/ou symboles donnés sous la forme d'au moins un groupe et pour afficher l'au moins un groupe dans le champ de sélection (2) sous la forme d'un symbole de groupe (8).

8. Dispositif selon l'une quelconque des revendications précédentes,
**caractérisé en ce que**
le dispositif de commande comprend au moins un actionneur poussoir rotatif, un joystick, un pavé tactile, un dispositif d'affichage tactile et/ou un dispositif de commande vocale et reconnaissance vocale.

9. Dispositif selon l'une quelconque des revendications précédentes,
**caractérisé en ce que**
il comprend un dispositif de saisie intelligent, au moyen duquel un caractère ou symbole sélectionné, ou une séquence de caractères et/ou symboles sélectionnés peut être comparée avec des données stockées dans le système de mémoire et
le dispositif est aménagé pour n'afficher que des caractères et/ou symboles dans l'au moins un champ de sélection (2), qui entrent en ligne de compte comme prochain caractère et/ou symbole sur la base du/des caractère(s) ou symbole(s) sélectionné(s) et des données présentes dans le dispositif de mémoire.
